## Europäisches Patentamt

## European Patent Office

## Office européen des brevets

(19)

(11) Veröffentlichungsnummer: **0 110 254 B1**

(12) **EUROPÄISCHE PATENTSCHRIFT**

(45) Veröffentlichungstag der Patentschrift:
**12.03.86**

(51) Int. Cl.⁴: **B 29 C 67/14,** F 16 F 1/18

(21) Anmeldenummer: **83111502.7**

(22) Anmeldetag: **17.11.83**

(54) **Verfahren zur Herstellung von Federstäben aus Faserverbundwerkstoffen.**

(30) Priorität: **25.11.82 DE 3243519**

(43) Veröffentlichungstag der Anmeldung:
**13.06.84 Patentblatt 84/24**

(45) Bekanntmachung des Hinweises auf die Patenterteilung:
**12.03.86 Patentblatt 86/11**

(84) Benannte Vertragsstaaten:
**DE FR GB IT NL SE**

(56) Entgegenhaltungen:
**EP - A - 0 005 916**
**EP - A - 0 061 273**
**EP - A - 0 082 321**
**GB - A - 2 100 835**
**US - A - 3 900 357**

(73) Patentinhaber: **BASF Aktiengesellschaft,**
**Carl-Bosch-Strasse 38, D-6700 Ludwigshafen (DE)**

(72) Erfinder: **Neitzel, Manfred, Prof. Dr., Leopoldstrasse 13,**
**D-6700 Ludwigshafen (DE)**
Erfinder: **Maier, Martin, An der Froschlache 3,**
**D-6700 Ludwigshafen (DE)**

## Beschreibung

Die Erfindung bezieht sich auf ein Verfahren zum Herstellen von im Höhe zu Breite-Verhältnis veränderlichen, vorzugsweise gekrümmten Federstäben aus Faserverbundwerkstoffen nach dem Wickelverfahren.

Das Wickelverfahren zur Herstellung von Faserverbundwerkstoffen ist bekannt, es ist z. B. beschrieben in Kunststoffe 71 (1981), Heft 10, S. 740 bis 742. Dabei werden Endlosfaserstränge mit einer Schmelze oder einer Lösung eines Kunststoffs bzw. dessen Ausgangsprodukten getränkt und um einen Wickelkern gewickelt, worauf der Kunststoff verfestigt und ggf. ausgehärtet wird.

Bekannte Verfahren zum Herstellen von Wickelkörpern, z. B. Rohren oder Wellen, gehen von zylindrischen oder leicht konischen Wickelkernen aus. Um schmale, streifenförmige gekrümmte Stäbe oder Schlaufen herzustellen, wird der Wickelkern durch Anbringen seitlicher Flansche in mehrere Segmente aufgeteilt, so dass man eine saubere Begrenzung der Wickelkörper erhält. Dabei ist es jedoch nur möglich, die Faserlagen im Bereich der Begrenzung im wesentlichen senkrecht zur Achse des Wickelkerns anzuordnen.

Der Erfindung lag nun die Aufgabe zugrunde, ein Verfahren zur Herstellung von vorzugsweise gekrümmten Federstäben aus mit mehreren Lagen Endlosfasern verstärkten Kunststoffen, die eine über die Länge gleichbleibende Querschnittsfläche bei veränderlichem Höhe-zu-Breite-Verhältnis aufweisen, nach dem Wickelverfahren zu entwickeln. Dabei wurde von der Tatsache ausgegangen, dass Biegefedern mit einer über ihre Länge gleichbleibenden Querschnittsfläche und einem entsprechend dem Belastungsverlauf veränderlichen Höhe-zu-Breite-Verhältnis ein geringeres Gewicht und ein günstigere Werkstoffausnutzung aufweisen als solche mit konstant rechteckigem Querschnitt.

Bei dem erfindungsgemässen Wickelverfahren ist der Wickelkern mit mehreren Reihen nebeneinander angeordneter rautenförmigen Erhebungen dergestalt versehen, dass sich die Faserstränge beim Ablegen in die durch die Erhebungen gebildeten Formnester an definierten Stellen kreuzen. Die Faserstränge werden dabei nach einem vorgegebenen Muster unter einem definierten Winkel zu der Achse des Wickelkerns derart abgelegt, dass sich das Höhe-zu-Breite-Verhältnis weitgehend optimal entsprechend der mechanischen Belastung der Biegefeder ändert.

Die Zahl der Reihen kann von 1 bis 100, vorzugsweise zwischen 1 und 10 variieren; die Zahl der Rauten kann 2 bis 20 betragen. Der Kreuzungswinkel der Rovings liegt vorzugsweise zwischen 3 und 15, insbesondere bei etwa 6°.

Der Wickelkern hat im allgemeinen einen kreiszylindrischen Querschnitt mit einem Radius, der der Vorkrümmung der Federstäbe entspricht. Er kann aber auch, vorzugsweise bei grösseren, schwach gekrümmten oder geraden Federstäben im Querschnitt als Polygon ausgebildet sein, das aus zwei oder mehreren Schalen aufgebaut ist. Der Wickelkern kann ein verlorener oder ein wieder verwertbarer Wickelkern sein, der z. B. aus einem spannend leicht bearbeitbaren Material besteht.

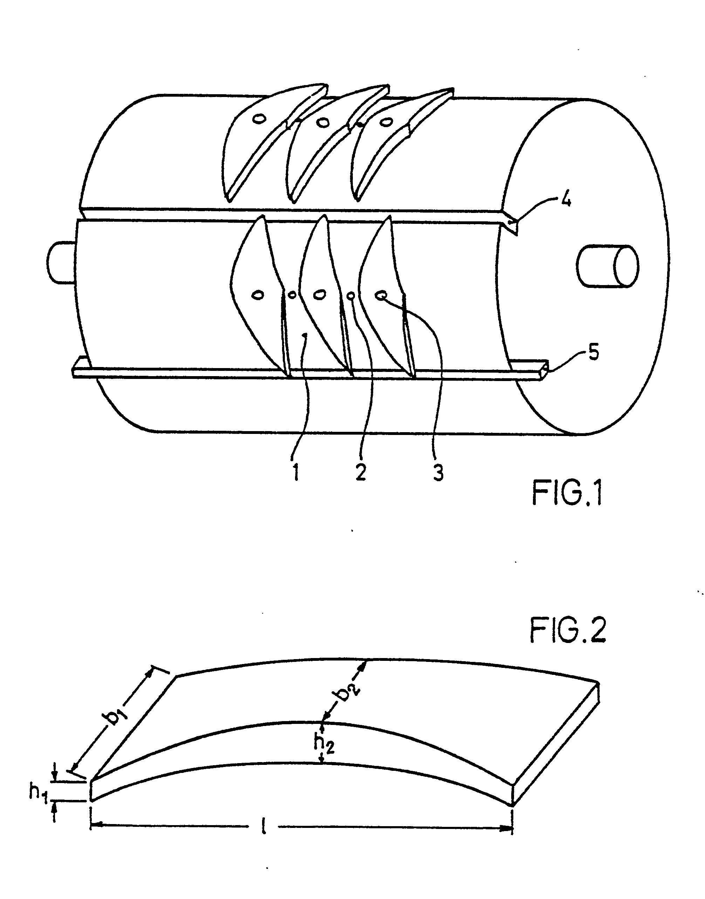

Ein Beispiel für einen Wickelkern zeigt Fig. 1.

Als Rohling eignet sich insbesondere ein dickwandiges extrudiertes oder gewickeltes Rohr aus einem Thermoplasten, z. B. Polypropylen. Die Kavitäten 1 im Wickelkern werden durch Fräsen oder Drehen hergestellt. Sie dienen als seitliche Begrenzung im Sinne von Formnestern. Der Wickelkern weist vorzugsweise in der Mitte der Formnester alternativ Bohrungen 2 zur Aufnahme von Bolzen oder länglichen Einsätzen auf. Sie dienen zum Erzeugen von Aussparungen in den Federstäben für Befestigungszwecke. Weitere Bohrungen 3 befinden sich in zwei oder mehreren der erhabenen Kernteilen einer jeden Formnestreihe zum Befestigen von als Patrizen wirkenden Schalenelementen. Diese entsprechend gekrümmten Schalen haben die Länge des Wickeldorns. Sie werden gegen den Kern verschraubt, decken die freie Oberfläche des Wickellaminats ab und bewirken eine zusätzliche Formung über den erzeugten Anpressdruck. Der Wickeldorn ist zweckmässigerweise an einer oder mehreren Stellen mit Längsnuten 4 versehen, die während des Wickelns mit entsprechenden Leisten 5 aus gleichem oder anderem Werkstoff ausgefüllt sind.

Beim Herstellvorgang werden die getränkten Fasern in der vorgesehenen Zahl nach vorgegebenen Mustern durch mehrmaliges Hin- und Herfahren des Fadenführungsauges auf dem sich drehenden Wickeldorn abgelegt. Anschliessend können die Patrizen aufgelegt und angepresst werden. Nach dem Aushärten werden diese entfernt und die Leisten aus den Nuten gezogen. Dann wird das Laminat an diesen Stellen längs aufgeschnitten, so dass die entstandenen Federstäbe vom Wickeldorn leicht abgenommen werden können.

Die Verstärkungsfasern können aus Glas, Kohlenstoff oder aromatischen Polyamiden bestehen, sie liegen als Endlosfaserrovings mit 50 bis 2400 tex vor. Man kann auch verschiedene Faserarten in getrennten Schichten oder als echte Hybridgelege wickeln.

Als Tränkharze können übliche Epoxidharze, ungesättigte Polyester oder Vinylesterharze, sowie auch Thermoplasten eingesetzt werden. Sie kommen in flüssiger Form als Schmelze oder Lösung der Kunststoffe bzw. deren Ausgangsprodukts zum Einsatz. Nach dem Wickelvorgang wird der Kunststoff verfestigt und ggf. ausgehärtet, wobei je nach Art des Kunststoffs diesem geeignete Katalysatoren zugesetzt werden oder erhöhte Temperaturen angewandt werden.

Die Dimensionen der erfindungsgemäss hergestellten Federstäbe können in weiten Grenzen schwanken: in der Länge l von 20 bis 150 cm, in der Breite b von 2 bis 20 cm, in der Höhe h von 0,5 bis 10 cm; sie können einen Krümmungsradius von 20 cm bis $\infty$ aufweisen. Das Verhältnis der Höhe $h_1$ in der Mitte der Stäbe zu der Höhe $h_2$ an den Ende der Stäbe kann zwischen 20:1 und 1,1:1, vorzugsweise zwischen 4:1 und 2:1, liegen (Skizze s. Fig. 2).

## Patentansprüche

1. Verfahren zur Herstellung von vorzugsweise gekrümmten Federstäben aus mit mehreren Lagen Endlosfasern verstärkten Kunststoffen, die eine über die Länge gleichbleibende Querschnittsfläche bei veränderlichem Höhe-zu-Breite-Verhältnis aufweisen, durch Tränken der Faserstränge mit einer Schmelze oder Lösung des Kunststoffs, bzw. dessen Ausgangsprodukten, Wickeln um einen Wickelkern, Verfestigen und ggf. Ausfährten des Kunststoffs, dadurch gekennzeichnet, dass der Wickelkern mit mehreren Reihen nebeneinander angeordneter rautenförmiger Erhebungen dergestalt versehen ist, dass die Faserstränge beim Ablegen in die durch die Erhebungen gebildeten Formnester an definierten Stellen kreuzen.

2. Verfahren zur Herstellung von Federstäben nach Anspruch 1, dadurch gekennzeichnet, dass diese eine Länge von 20 bis 150 cm, eine Breite von 2 bis 20 cm, eine Höhe von 0,5 bis 10 cm und einen Krümmungsradius von 20 cm bis unendlich aufweisen.

3. Verfahren zur Herstellung von Federstäben nach Anspruch 1, dadurch gekennzeichnet, dass das Verhältnis der Höhe $h_1$ in der Mitte der Stäbe zu der Höhe $h_2$ an den Enden der Stäbe zwischen 20 zu 1 und 1,1 zu 1 liegt.

## Claims

1. A process for the production of preferably curved leaf springs which consist of a plurality of layers of plastics material reinforced with continuous filaments and have a constant cross-sectional area over their length, the thickness/width ratio varying, by impregnating the fibre strands with a melt or solution of the plastics material or its starting materials, winding the impregnated strands around a core, and solidifying and optionally curing the plastics material, wherein the core is provided with a plurality of rows of diamond-shaped projections which are arranged next to one another in such a way that the fibre strands, as they are disposed in the gaps formed between the projections, cross one another at specific points.

2. A process for the production of leaf springs as claimed in Claim 1, which have a length of 20 to 150 cm, a width of 2 to 20 cm, a thickness of 0.5 to 20 cm, and a radius of curvature of 20 cm to infinity.

3. A process for the production of leaf springs as claimed in Claim 1, wherein the ratio of the thickness $h_1$ at the middle of the spring to the thickness $h_2$ at the ends of the spring is from 20:1 to 1.1:1.

## Revendications

1. Procédé de fabrication de barreaux élastiques, de préférence incurvés, en matières plastiques renforcées par plusieurs couches de fibres sans fin, qui ont une surface de section constante sur la longueur, avec un rapport variable entre épaisseur et largeur, par imprégnation des brins de fibres avec une masse fondue ou une solution de matière plastique, ou ses produits de départ, enroulement sur un noyau d'enroulement, renforcement et éventuellement durcissement complet de la matière plastique, caractérisé par le fait que le noyau d'enroulement est muni de plusieurs rangées d'éminences, en forme de losanges, disposées côte à côte, de manière que les brins de fibres, lors de la mise en place dans les nids de moulage formés par les éminences, se croisent en des zones bien définies.

2. Procédé de fabrication de barreaux élastiques selon la revendication 1, caractérisé par le fait que ceux-ci ont une longueur de 20 à 150 cm, une largeur de 2 à 20 cm, une épaisseur de 0,5 à 10 cm et un rayon de courbure de 20 cm jusqu'à l'infini.

3. Procédé de fabrication de barreaux élastiques selon la revendication 1, caractérisé par le fait que le rapport entre l'épaisseur $h_1$ au milieu du barreau et l'épaisseur $h_2$ aux extrémités du barreau est compris entre 20:1 et 1,1:1.

FIG.1

FIG.2